# EUROPÄISCHE PATENTSCHRIFT

(11) **EP 2 032 310 B1**
(45) Veröffentlichungstag und Bekanntmachung des Hinweises auf die Patenterteilung: **04.11.2009**
(21) Anmeldenummer: 07728093.1
(22) Anmeldetag: 13.04.2007
(51) Int. Cl.: B24C 1/04, B24C 1/10, F01D 5/28

(54) **STRAHLVORRICHTUNG**
PEENING DEVICE
DISPOSITIF DE PROJECTION

(30) Priorität: 26.05.2006 EP 06010927
(43) Veröffentlichungstag der Anmeldung: 11.03.2009
(73) Patentinhaber: SIEMENS AKTIENGESELLSCHAFT, 80333 München (DE)
(72) Erfinder: BERNDT, Thomas, 12524 Berlin (DE); REYMANN, Helge, Briarcliff Manor, NY 10510 (US)
(86) Internationale Anmeldenummer: PCT/EP2007/053628
(87) Internationale Veröffentlichungsnummer: WO 2007/137902

(56) Entgegenhaltungen:
- EP-A- 1 207 013
- EP-A- 1 208 942
- EP-A- 1 621 288
- US-A- 4 530 861
- US-A1- 2006 021 410

## Beschreibung

Die vorliegende Erfindung betrifft eine Strahlvorrichtung zum Strahlen eines Bauteils mit einem zu strahlenden Teil und einem nicht zu strahlenden Teil.

In einem Strahlverfahren wird ein Strahlgut mit hoher Geschwindigkeit gegen die zu bearbeitende Oberfläche eines Bauteile geschleudert, wobei der zu erzielende Arbeitserfolg erreicht wird. Ein Beispiel für einen Strahlprozess ist das Kugelstrahlen, welches ein Spezialfall des Verfestigungsstrahlens ist. Beim Kugelstrahlen werden kleine Kugeln mittels Schleuderrad-, Druckluft- oder Injektorstrahlanlagen auf die zu behandelnde Oberfläche geschleudert. Durch den Aufprall des Strahlguts mit hoher Geschwindigkeit kommt es zu einer elastisch-plastischen Verformung im Bereich der Oberfläche, was Druckeigenspannungen im Werkstück herbeiführt, welche zu einer Verfestigung im Bereich der Oberfläche des gestrahlten Bauteilabschnitts führt. Ein anderes Beispiel für einen Strahlprozess ist das Sandstrahlen, bei dem beispielsweise Korundkörner auf die zu bearbeitende Oberfläche geschleudert werden, um Oberflächenbereiche abzutragen oder aufzurauen.

Wenn bei einem Bauteil nur bestimmte Bereiche zu strahlen sind, werden die nicht zu strahlenden bereiche in der Regel mittels einer Maskierung geschützt. So ist es beispielsweise üblich, bei Turbinenschaufeln, welche einen Schaufelfuß, ein Schaufelblatt und eine zwischen dem Schaufelfuß und dem Schaufelblatt angeordnete Schaufelplattform aufweisen, den Schaufelfuß und die dem Schaufelfuß zugewandte Seite der Schaufelplattform einem Kugelstrahlprozess zu unterziehen, um ihre Festigkeit zu erhöhen. Die übrigen Seiten der Schaufelplattform sowie das Schaufelblatt werden dabei dem Kugelstrahlprozess nicht unterzogen, da dies zu einer Verschlechterung der Hochtemperatureigenschaften führen würde. Die Maskierung derjenigen Teile der Turbinenschaufel, die nicht dem Kugelstrahlprozess unterzogen werden sollen, erfolgt von Hand und ist daher arbeits- und kostenintensiv.

Aufgabe der vorliegenden Erfindung ist es, eine Strahlvorrichtung zu schaffen, die eine weniger arbeits- und kostenintensive Vorbereitung von Bauteilen, die zu strahlende und nicht zu strahlende Abschnitte aufweisen, ermöglicht.

Diese Aufgabe wird durch eine Strahlvorrichtung nach Anspruch 1 gelöst. Die abhängigen Ansprüche enthalten vorteilhafte Ausgestaltungen der erfindungsgemäßen Strahlvorrichtung.

Eine erfindungsgemäße Strahlvorrichtung zum Strahlen eines Bauteils mit einem zu strahlenden Teil und einem nicht zu strahlenden Teil umfasst eine Kammer mit wenigstens einer darin angeordneten Öffnung, wobei die Öffnung derart dimensioniert ist, dass der nicht zu strahlende Teil des Bauteils wenigstens teilweise durch sie hindurchgeführt werden kann. Außerdem ist eine Halterung zum Halten des Bauteils vorhanden. Diese weist einen Abschnitt auf, der die Öffnung in der Kammer bei wenigstens teilweise hindurchgeführtem nicht zu strahlenden Teil des Bauteils vollständig bedeckt und den nicht zu strahlenden Teil des Bauteils zwischen dem an den zu strahlenden Teil des Bauteils angrenzenden Bereich und der Öffnung vollständig umschließt.

Das in die Halterung eingesetzte Bauteil kann dann derart in der Kammer angeordnet werden, dass sich der nicht zu strahlende Teil größtenteils für das Strahlgut unzugänglich außerhalb der Kammer befindet. Dabei ist der nicht zustrahlende Teil dort, wo er in die Kammer hinein ragt, durch die Halterung, die den in die Kammer hineinragenden nicht zu strahlenden Teil vollständig umgibt, geschützt. Eine aufwendige Maskierung des nicht zu strahlenden Teils des Bauteils kann entfallen.

Vorteilhafterweise weist die Kammer einen Kammerboden auf, in dem die wenigstens eine Öffnung angeordnet ist. Der nicht zu strahlende Teil des Bauteils kann in dieser Ausgestaltung in vertikaler Richtung durch die Öffnung hindurchgeführt werden. Das Kugelstrahlen kann dann von der Seite des Bauteils her erfolgen, und das Strahlgut kann zum Kammerboden hin vom Bauteil und der Halterung abfließen, sodass die Ausgänge des Strahlguts nicht mit Strahlgut verstopft werden.

Die Strahlvorrichtung kann insbesondere als Strahlvorrichtung zum Strahlen eines Teils einer Turbinenschaufel mit einem Schaufelblatt, einem Schaufelfuß und einer zwischen dem Schaufelblatt und dem Schaufelfuß angeordneten Schaufelplattform ausgestaltet sein. Der zu strahlende Teil des Bauteils wird dann vom Schaufelfuß und von der dem Schaufelfuß zugewandten Seite der Schaufelplattform gebildet. Der nicht zu strahlende Teil des Bauteils wird dann vom Schaufelblatt und den nicht dem Schaufelfuß zugewandten Seiten der Schaufelplattform gebildet. Die Dimensionen der Öffnung in der Kammer sind in dieser Ausgestaltung derart gewählt, dass das Schaufelblatt wenigstens teilweise durch die Öffnung hindurchgeführt werden kann. Zudem ist die Halterung derart ausgestaltet, dass sie die Turbinenschaufel wenigstens im Bereich der Kante der Schaufelplattform vollständig umschließt. Im Vergleich zu einer Strahlvorrichtung nach Stand der Technik kann die Turbinenschaufel mit der erfindungsgemäßen Vorrichtung mit geringerem Arbeits- und Kostenaufwand gestrahlt werden, da das Maskieren des gesamten Schaufelblattes und eines großen Teils der Schaufelplattform entfällt. Das Einsetzen der Turbinenschaufel in die Halterung und das Verschließen der Öffnung mit der Halterung sind demgegenüber sehr viel weniger arbeits- und kostenintensiv. Außerdem ist der Materialverbrauch, geringer, da im Gegensatz zum Maskieren kein Material Verwendung findet, das nicht wieder zu verwenden wäre.

Die Halterung kann außerdem einen Bereich aufweisen, auf dem die dem Schaufelblatt zugewandte Seite der Schaufelplattform beim Halten der Schaufel aufliegt. Auf diese Weise kann die Turbinenschaufel von der Halterung unterstützt werden, insbesondere wenn die Öffnung im Kammerboden angeordnet ist, sodass eine sichere Auflage der Turbinenschaufel und damit eine sichere Positionierung ohne weitere Hilfsmittel erzielt werden kann.

Erfindungsgemäß ist die Öffnung von einem zum Kammerinneren hin vorstehenden Rand umgeben. Mit dieser Ausgestaltung kann erreicht werden, dass der Schaufelfuß einen derart großen Abstand von der Wand bzw. dem Boden der Kammer besitzt, dass die Richtungen, aus der das Strahlgut den Schaufelfuß erreichen kann, nicht durch die nahe Wand bzw. den nahen Boden wesentlich eingeschränkt werden.

Die Halterung kann zusätzlich eine Kappe umfassen, die zum Aufsetzen auf das dem Schaufelblatt abgewandte Ende des Schaufelfußes ausgebildet ist. Mittels der Kappe können etwaige im Schaufelfuß angeordnete Eintrittsöffnungen von Kühlluftkanälen gegen das Eindringen von Strahlgut geschützt werden. Die Kappe kann mit der Halterung verbunden oder verbindbar sein, insbesondere derart, dass sich die Verbindung bei von der Halterung gehaltener Turbinenschaufel im Bereich der Schmalseiten des Schaufelfußes mit Abstand vom Schaufelfuß befindet. Auf diese Weise kann eine hochstabile Anordnung der Kappe erzielt werden, ohne dass die Zugänglichkeit des Schaufelfußes für das Strahlgut wesentlich eingeschränkt würde.

Die Halterung kann zum Verhindern von Strahlgutablagerungen, welche im Verlauf des Strahlprozesses den freien Zugang des Strahlgutes zur zu strahlenden Oberfläche beeinträchtigen könnten, Abführflächen und/oder Abführkanäle zum Abführen des Strahlgutes aufweisen. Insbesondere wenn die Öffnung im Kammerboden angeordnet ist, kann so unter Ausnutzung der Schwerkraft ein rasches Abführen des Strahlguts in Richtung auf den Kammerboden herbeigeführt werden.

Die Kammer ist vorteilhafterweise als Unterdruckkammer ausgebildet, sodass einerseits der Strahlprozess durch Luft in der Kammer nicht beeinträchtigt wird und andererseits einem Austreten von Strahlgut aus der Kammer im Fall einer undichten Stelle entgegengewirkt werden kann.

Die erfindungsgemäße Strahlvorrichtung kann insbesondere als Strahlvorrichtung zum Durchführen eines Kugelstrahlprozesses, also als Kugelstrahlvorrichtung, ausgebildet sein.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
- Fig. 1: zeigt beispielhaft eine Gasturbine in einem Längs- teilschnitt.
- Fig. 2: zeigt in perspektivischer Ansicht eine Laufschaufel oder Leitschaufel einer Strömungsmaschine.
- Fig. 3: zeigt eine Brennkammer einer Gasturbine
- Fig. 4: zeigt schematisch eine erfindungsgemäße Strahlvor- richtung in einer geschnittenen Seitenansicht.
- Fig. 5: zeigt ein Detail aus Fig. 4 in einer geschnittenen Seitenansicht.
- Fig. 6: zeigt das Detail aus Fig. 5 in einen zum Schnitt aus Fig. 5 senkrechten Schnitt.
- Fig. 7: zeigt eine Abwandlung des in Fig. 5 gezeigten Details.

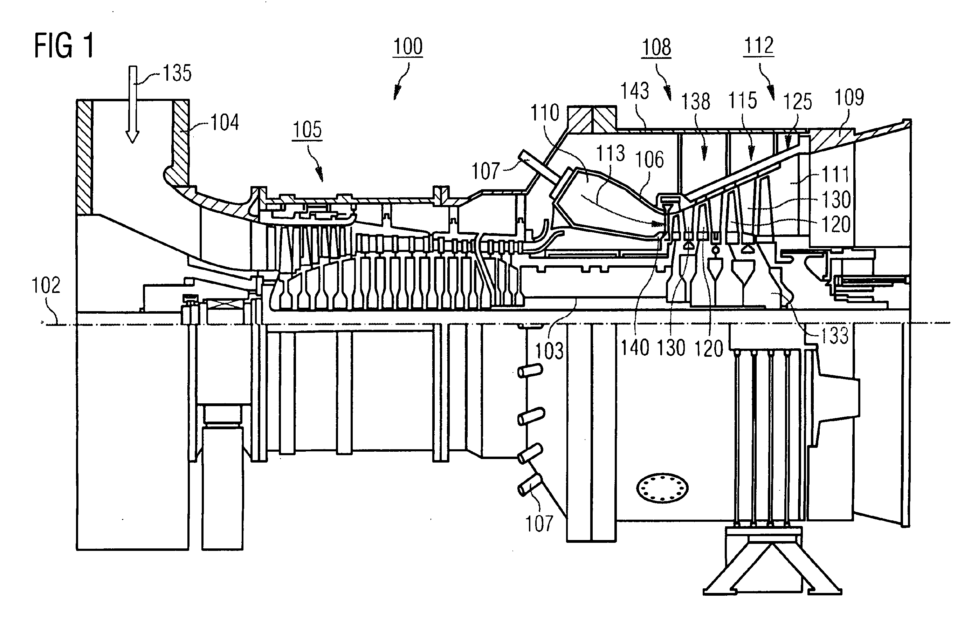

Die Figur 1 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

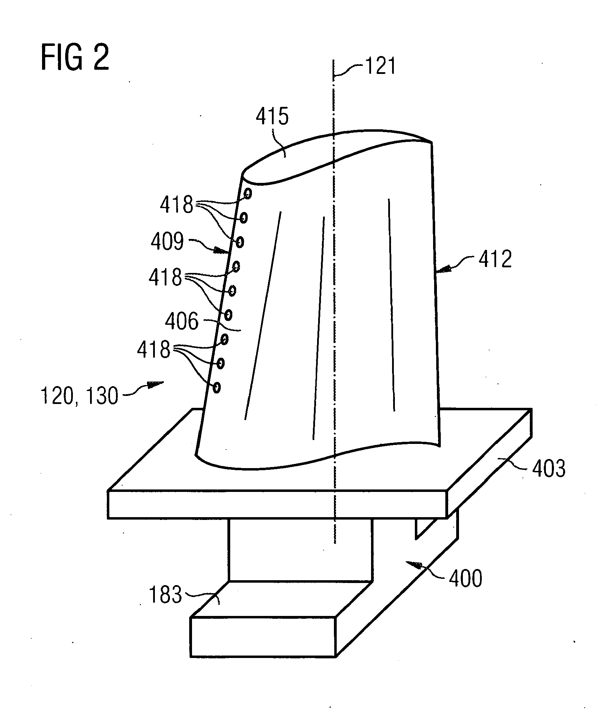

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, "Y.O.-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

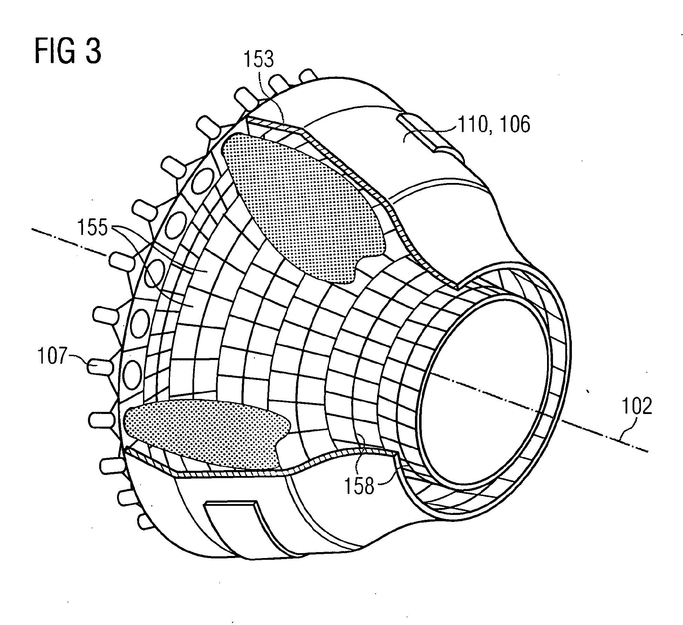

Die Figur 3 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

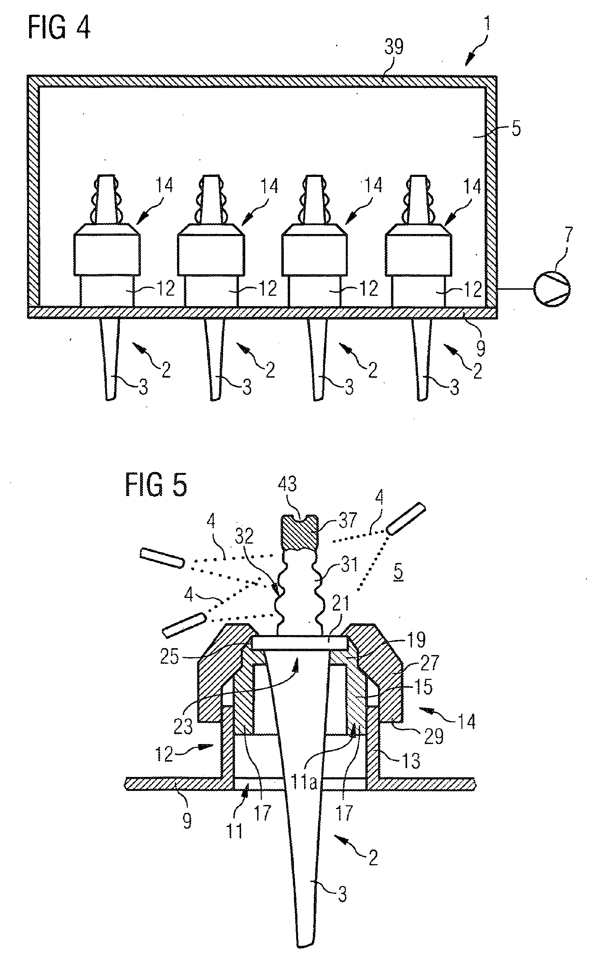

Ein Ausführungsbeispiel für die erfindungsgemäße Vorrichtung zum Strahlen eines Bauteils ist in Fig. 4 in einer geschnittenen Seitenansicht schematisch dargestellt. Die Strahlvorrichtung 1 ist als Kugelstrahlvorrichtung zum Kugelstrahlen der Schaufelfüße von Turbinenschaufeln 2 ausgestaltet. Sie umfasst eine Unterdruckkammer 5, in der Druck mittels einer angeschlossenen Vakuumpumpe 7 gegenüber dem Umgebungsdruck verringert werden kann. Im Kammerboden 9 der Unterdruckkammer 5 sind Öffnungen vorhanden, durch die die Schaufelblätter 3 der Turbinenschaufeln 2 hindurchgesteckt werden können, sodass sie aus der Unterdruckkammer 5 herausragen.

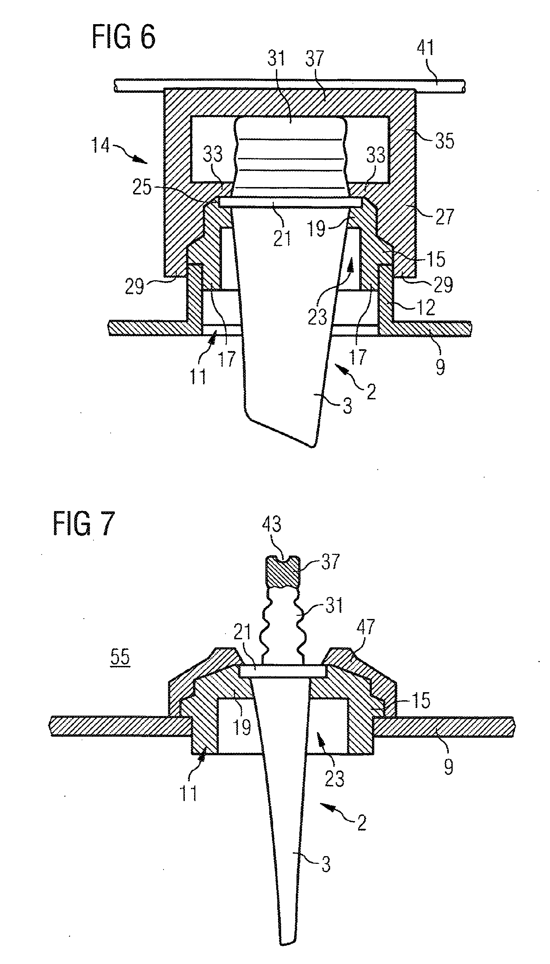

Eine Öffnung 11 im Kammerboden 9 sowie eine Turbinenschaufel 2, deren Schaufelblatt 3 durch die Öffnung 11 hindurchgesteckt ist, sind in Fig. 5 in einer Schnittansicht gezeigt. Eine zum Schnitt aus Fig. 5 senkrechte Schnittansicht derselben Turbinenschaufel 2 und derselben Öffnung 11 zeigt Fig. 6.

Die Öffnung 11 ist von einer zum Inneren der Unterdruckkammer 5 hin hervorstehenden Wand 13 umgeben, welche ein stutzenartiges Element 12 um die Öffnung 11 herum bildet. Eine Halterung 14 mit einer Turbinenschaufel 2 ist in die Öffnung 11a des Stutzens 12 eine eingesetzt. Die Halterung umfasst zwei Teile, nämlich ein Innenelement 15 und ein Außenelement 27. In die Öffnung 11a des Stutzens 12 ist das Innenelement 15 eingesetzt. Ein Abschnitt 17 des Innenelementes 15 weist hierzu eine Außenabmessung auf, die der Innenabmessung des Stutzens 12 entspricht, sodass das Innenelement 15 passgenau in die Öffnung 11a eingesetzt werden kann. Das Innenelement 15 weist darüber hinaus einen Auflageabschnitt 19 auf, auf dem die Schaufelplattform 21 der Turbinenschaufel 2 aufliegen kann. Im Zentrum des Auflageabschnittes 19 befindet sich eine Durchführöffnung 23, durch die das Schaufelblatt 3 durch das Innenelement 15 der Halterung 14 hindurchgeführt werden kann.

Das Innenelement 15 ist dabei derart ausgestaltet, dass es die Kante 25 der Schaufelplattform 21, die dem Schaufelblatt 3 zugewandte Seite der Schaufelplattform 21 sowie einen an die Schaufelplattform 21 angrenzenden Abschnitt des Schaufelblattes 3 vollständig umschließt. Insbesondere können die Abmessungen des Auflageabschnitts 19 sowie der Durchführöffnung 23 so ausgebildet sein, dass sie eine passgenaue Auflagefläche bzw. Durchführung für die Turbinenschaufel 2 bilden.

Mittels des Außenelementes 27, das über das Innenelement 15 gestülpt ist und welches einen Abschnitt aufweist, der an der Außenseite der Wand 13 zur Anlage kommt, ist das Innenelement 15 und damit die Turbinenschaufel 2 gesichert. Der Abschnitt 29 ist dabei derart ausgestaltet, dass er eng an der Außenseite der Wand 13 anliegt. Vorzugsweise kann zudem eine Spannvorrichtung vorhanden sein, mit welcher das Innenelement 15 und das Außenelement 27 derart gegeneinander verspannt werden können, dass die Halterung 14 mit Klemmsitz im Bereich der Öffnung 11a am Stutzen 12 festgelegt ist.

Das Außenelement 27 reicht an der Breitseite der Schaufel 2 nicht bis an den Schaufelfuß 31 heran (vgl. Fig. 5). Lediglich an den Schmalseiten'der Schaufel 2 befinden sich an den Schaufelfuß 31 heranreichende Halteabschnitte 33, welche von oben an die Schaufelplattform 33 angreifen und so die Schaufelplattform 21 auf dem Auflageabschnitt 19 des Innenelementes 16 fixieren.

Das Außenelement 27 weist außerdem einen Bügel 35 auf, welcher ein Oberteil 37 aufweißt, das passgenau an der Oberseite des Schaufelfußes 31 anliegt, wenn das Außenelement 27 auf ein Innenelement 15 mit einer darin angeordneten Schaufel 2 aufgesetzt wird. Das Oberteil 37 des Bügels 35 bildet eine Kappe, welche Eintrittsöffnungen für Kühlluft in interne Kühlluftkanäle der Turbinenschaufel 2 gegen das Eindringen von Strahlgut 4 abdichtet. Damit der Schaufelfuß 31 überall für das Strahlgut zugänglich bleibt, ist der Bügel 35 so ausgestaltet, dass er außer an der Oberseite des Schaufelfußes 31 mit Abstand vom Schaufelfuß 31 verläuft, wenn eine Turbinenschaufel 2 von der Halterung 14 gehalten wird.

Aufgrund des Stutzens 12 und der Bauhöhe der Halterung 14 besitzt der Schaufelfuß 31 einer Turbinenschaufel 2 einen ausreichenden Abstand vom Kammerboden 9, sodass auch das Strahlen des Schaufelfußes aus einer zum Kammerboden hin geneigten Richtung möglich ist. Dadurch können beispielsweise gewölbte Abschnitte 32 von Turbinenschaufeln 2 so mit Strahlgut 4 bestrahlt werden, dass das Strahlgut 4 weitgehend Senkrecht auf alle Oberflächenbereiche auftreffen kann.

Die Halterung 14 ist mit möglichst wenigen waagrechten Flächen ausgestaltet, sodass das Strahlgut 4 ungehindert von der Halterung in Richtung auf den Kammerboden 9 ablaufen kann. Strahlgutablagerungen lassen sich so weitgehend vermeiden.

Während eines Strahlprozesses ist die Öffnung 11 durch die Halterung 14 und die darin angeordnete Turbinenschaufel 2 vollständig verschlossen, sodass das aus der Unterdruckkammer 5 herausragende Schaufelblatt 3 für das Strahlgut 4 nicht zugänglich ist. Diejenigen Abschnitte des Schaufelblattes 3, die von der Halterung 14 vollständige umgeben sind, sind durch diese gegen Strahlgut geschützt. Gleiches gilt für die Schaufelplattform.

Das Einbringen einer Turbinenschaufel 2 in die Unterdruckkammer 5 kann erfolgen, indem das Oberteil 39 der Unterdruckkammer 5 abgenommen wird. Dadurch werden alle Kammeröffnungen 11 zugänglich. Es wird dann zuerst, das Innenelement 15 der Halterung 14 auf den Stutzen 12 aufgesetzt. Sodann wird die Turbinenschaufel 2 mit dem Schaufelblatt 3 durch die Durchtrittsöffnung 23 des Innenelements 15 hindurchgeführt, sodass die Schaufelplattform 21 auf dem Auflageabschnitt 19 zur Auflage kommt. Anschließend wird das Außenelement 27 aufgesetzt, und gegen das Innenelement 15 verspannt, um einen sicheren Halt der Turbinenschaufel 2 zu gewährleisten. Bei aufgesetztem Außenelement 27 ist die Oberseite des Schaufelfußes 31 dann durch das Oberteil 37 des Bügelabschnitts 35 des Außenelementes 27 geschützt. Das Oberteil 37 des Bügelabschnittes kann außerdem Zapfen aufweisen, welche in die Kühllufteintrittsöffnungen im Schaufelfuß 31 eingreifen.

Das Verspannen des Außenelementes 27 gegen das Innenelement 15 kann beispielsweise mittels Schraub- oder Schnappverbindungen erfolgen. Es ist jedoch auch möglich, das Außenelement 27 von oben auf das Innenelement 15 zu drücken, wozu eine Stange 41 dient, die in eine im Oberteil 37 angebrachte Kerbe 43 eingreifen kann. Durch Druck auf die Stange 41 kann das Außenelement 27 fest an das Innenelement 15 angedrückt werden.

Eine Abwandlung des mit Bezug auf die Fig. 5 und 6 beschriebenen Ausführungsbeispiels der Strahlvorrichtung ist in Fig. 7 dargestellt. Die in Fig. 7 gezeigte Schnittansicht entspricht der Schnittansicht aus Fig. 5. Die Unterdruckkammer 55 unterscheidet sich von der Unterdruckkammer 5 der ersten Ausführungsvariante dadurch, dass die Öffnung 11 im Kammerboden 9 nicht von einem Stutzen 12 umgeben ist. Das Innenelement 15 wird bei dieser Ausführungsform direkt in die Öffnung 11 eingesetzt. Mittels eines Außenelementes 47, welches im Wesentlichen dem Außenelement 37 der ersten Ausführungsvariante entspricht, wird das Innenelement 15 mitsamt einer darin eingesetzten Turbinenschaufel 2 gesichert. Das Außenelement 47 unterscheidet sich vom Außenelement 37 lediglich dadurch, dass der an der Außenseite des Stutzens 12 zur Anlage kommende Abschnitt 29 fehlt. Stattdessen wird das Außenelement 47 mittels beispielsweise der Stange 41 direkt an den Kammerboden 9 angedrückt.

In der beschriebenen Ausführungsvariante ist der Abstand des Schaufelfußes 31 vom Kammerboden 9 deutlich geringer als in der ersten Variante. Je nach Design des Schaufelfußes 31 und nach verwendetem Strahlprozess kann dieser geringere Abstand jedoch auch ausreichen, um den Schaufelfuß 31 strahlen zu können, insbesondere kugelstrahlen zu können. Im Übrigen unterscheidet sich die in Fig. 7 dargestellte Ausführungsvariante nicht von der in den Fig. 5 und 6 dargestellten Ausführungsvariante.

Es sei an dieser Stelle angemerkt, dass die Öffnung 11, anders als im Ausführungsbeispiel dargestellt, grundsätzlich auch in einer Seitenwand oder in der Decke der Unterdruckkammer angeordnet sein kann. Der Vorteil der Anordnung der Öffnung im Kammerboden ist jedoch, dass das Einsetzen der Turbinenschaufel 2 in die Halterung gegenüber den anderen Varianten einfacher ist, da bereits die Schwerkraft zu einer Lagefixierung der Schaufel führt, nachdem diese in das Innenelement eingesetzt ist, wohingegen in den anderen Varianten Maßnahmen getroffen werden müssen, um die Schaufel 2 solange zu fixieren, bis das Außenelement der Halterung die Fixierung übernommen hat.

## Patentansprüche

1. Strahlvorrichtung (1) zum Strahlen einer Turbinenschaufel (2), welche ein Schaufelblatt (3), einen Schaufelfuß (31) und eine zwischen Schaufelblatt (3) und Schaufelfuß (31) angeordnete Schaufelplattform (21) aufweist,
wobei ein zu strahlender Teil der Turbinenschaufel (2) von der dem Schaufelfuß (31) zugewandten Seite der Schaufelplattform (21) gebildet ist und ein nicht zu strahlender Teil der Turbinenschaufel (2) von dem Schaufelblatt (3) und der nicht dem Schaufelfuß (31) zugewandten Seite der Schaufelplattform (21) gebildet ist, welche umfasst:
- eine Kammer (5) mit wenigstens einer darin angeordneten Öffnung (11), wobei die Öffnung (11) derart dimensioniert ist, dass der nicht zu strahlende Teil des Schaufelblatts (3) wenigstens teilweise durch sie hindurchgeführt werden kann, und
- eine Halterung (14) zum Halten der Turbinenschaufel (2), die einen Abschnitt (19) aufweist, der die Öffnung (11) in der Kammer (5) bei wenigstens teilweise hindurchgeführtem nicht zu strahlenden Teil der Turbinenschaufel (2) vollständig bedeckt und den nicht zu strahlenden Teil der Turbinenschaufel (2) zwischen dem an den zu strahlenden Teil der Turbinenschaufel (2) angrenzenden Bereich der Öffnung (11) vollständig umschließt, wobei die Halterung (14) derart ausgestaltet ist, dass sie die Turbinenschaufel (2) wenigstens im Beeich der Kante (25) der Schaufelplattform (21) vollständig umschließt,
**dadurch gekennzeichnet, dass**
die Öffnung (11) von einem zum Kammerinneren hin vorstehenden Rand (13) umgeben ist.

2. Strahlvorrichtung nach Anspruch 1,
in der die Kammer (5) einen Kammerboden (9) aufweist, in dem die wenigstens eine Öffnung (11) angeordnet ist.

3. Strahlvorrichtung (1) nach Anspruch 1,
in der die Halterung (14) einen Bereich (19) aufweist, auf dem die dem Schaufelblatt (3) zugewandte Seite der Schaufelplattform (21) beim Halten der Turbinenschaufel (2) aufliegt.

4. Strahlvorrichtung (1) nach einem der Anspruche 1 bis 3,
in der zusätzlich eine Kappe (37) vorhanden ist, die zum Aufsetzen auf das dem Schaufelblatt (3) zugewandte Ende des Schaufelfußes (31) ausgebildet ist.

5. Strahlvorrichtung (1) nach Anspruch 4,
in der die Kappe (37) mit der Halterung (14) derart verbunden oder verbindbar ist, dass sich die Verbindung bei von der Halterung (14) gehaltener Turbinenschaufel (2) im Bereich der Schmalseiten des Schaufelfußes (31) mit Abstand vom Schaufelfuß (31) befindet.

6. Strahlvorrichtung (1) nach einem der Ansprüche 1 bis 5,
in der die Halterung Abführflächen und/oder Abführkanäle zum Abführen des Strahlguts aufweist.

7. Strahlvorrichtung (1) nach einem der Ansprüche 1 bis 6,
in der die Kammer eine Unterdruckkammer (5) ist.

8. Strahlvorrichtung (1) nach einem der vorhergehenden Ansprüche,
die als Strahlvorrichtung zum Verfestigungsstrahlen, insbesondere zum Kugelstrahlen von Turbinenschaufeln (2) ausgebildet ist.

## Claims

1. Peening device (1) for peening a turbine blade (2) which has a blade leaf (3), a blade foot (31) and a blade platform (21) arranged between the blade leaf (3) and blade foot (31), a part of the turbine blade (2) which is to be peened being formed by that side of the blade platform (21) which faces the blade foot (31), and a part of the turbine blade (2) which is not to be peened being formed by the blade leaf (3) and by that side of the blade platform (21) which does not face the blade foot (31), which peening device comprises:
- a chamber (5) with at least one orifice (11) arranged in it, the orifice (11) being dimensioned in such a way that that part of the blade leaf (3) which is not to be peened can be led at least partially through it, and
- a mounting (14) for holding the turbine blade (2), which mounting has a portion (19) which, when that part of the turbine blade (2) which is not to be peened is led at least partially through, completely covers the orifice (11) in the chamber (5) and completely surrounds that part of the turbine blade (2) which is not to be peened between that region of the orifice (11) which is adjacent to that part of the turbine blade (2) which is to be peened, the mounting (14) being configured in such a way that it completely surrounds the turbine blade (2) at least in the region of the edge (25) of the blade platform (21),
**characterized in that**
the orifice (11) is surrounded by a margin (13) projecting toward the chamber interior.

2. Peening device according to Claim 1, in which the chamber (5) has a chamber bottom (9) in which the at least one orifice (11) is arranged.

3. Peening device (1) according to Claim 1, in which the mounting (14) has a region (19) on which that side of the blade platform (21) which faces the blade leaf (3) lies when the turbine blade (2) is held.

4. Peening device (1) according to one of Claims 1 to 3, in which a cap (37) is additionally present, which is designed to be placed onto that end of the blade foot (31) which faces away from the blade leaf (3).

5. Peening device (1) according to Claim 4, in which the cap (37) is connected or connectable to the mounting (14) in such a way that, with the turbine blade (2) held by the mounting (14), the connection is located at a distance from the blade foot (31) in the region of the narrow sides of the blade foot (31).

6. Peening device (1) according to one of Claims 1 to 5, in which the mounting has discharge surfaces and/or discharge ducts for discharging the peening product.

7. Peening device (1) according to one of Claims 1 to 6, in which the chamber is a vacuum chamber (5).

8. Peening device (1) according to one of the preceding claims, which is designed as a peening device for strain hardening peening, in particular for the shot peening of turbine blades (2).

## Revendications

1. Dispositif ( 1 ) de projection pour faire des projections sur une aube ( 2 ) de turbine, laquelle a une lame ( 3 ), une emplanture ( 31 ) et une plateforme ( 21 ) disposée entre la lame ( 3 ) et l'emplanture ( 31 ), dans lequel une partie, devant recevoir des projections, de l'aube ( 2 ) de la turbine est formée par le côté de la plateforme ( 21 ) de la turbine tourné vers l'emplanture ( 31 ) de la turbine et une partie de l'aube ( 2 ) de la turbine, qui ne doit pas recevoir des projections, est formée par la lame ( 3 ) de la turbine et par le côté de la plateforme ( 21 ) de la turbine qui n'est pas tourné vers l'emplanture ( 31 ) de l'aube, le dispositif comprenant :
- une chambre ( 5 ) ayant au moins une ouverture ( 11 ) qui y est disposée, l'ouverture ( 11 ) ayant des dimensions telles que la partie de la lame ( 3 ) de la turbine qui ne doit pas recevoir de projections, peut en être traversée au moins en partie, et
- une fixation ( 14 ) qui est destinée à fixer l'aube ( 2 ) de la turbine et qui a une partie ( 19 ) qui recouvre complètement l'ouverture ( 11 ) de la chambre ( 5 ), pour la partie de l'aube ( 2 ) de la turbine traversée au moins en partie et qui ne doit pas recevoir de projections, et qui entoure complètement la partie de l'aube ( 2 ) de la turbine, qui ne doit pas recevoir de projections, entre la zone ( 1 ) de l'ouverture voisine de la partie de l'aube ( 2 ) de la turbine qui doit recevoir des projections, la fixation ( 14 ) étant telle qu'elle entoure complètement l'aube ( 2 ) de la turbine au moins dans la zone du bord ( 25 ) de la plateforme ( 21 ) de l'aube,
**caractérisé en ce que,**
l'ouverture ( 11 ) est entourée d'un bord ( 13 ) en saillie vers l'intérieur de la chambre.

2. Dispositif de projection suivant la revendication 1, dans lequel la chambre a un fond ( 9 ) dans lequel est disposé la au moins une ouverture ( 11 ).

3. Dispositif ( 1 ) de projection suivant la revendication 1,
dans lequel la fixation ( 14 ) a une zone ( 19 ) sur laquelle le côté, tourné vers la lame ( 3 ) de l'aube, de la plateforme ( 21 ) de l'aube, s'applique lors de la fixation de l'aube ( 2 ) de la turbine.

4. Dispositif ( 1 ) de projection suivant l'une des revendications 1 à 3,
dans lequel il y a en outre une coiffe qui est constituée pour coiffer l'extrémité de l'emplanture ( 31 ) de l'aube, qui est tournée vers la lame ( 3 ) de l'aube.

5. Dispositif ( 1 ) de projection suivant la revendication 4,
dans lequel la coiffe ( 37 ) est assemblée à la fixation ( 14 ) ou peut l'être de façon à ce que l'assemblage pour l'aube ( 2 ) de turbine fixée par la fixation ( 14 ) se trouve dans la zone des côtés étroits de l'emplanture ( 31 ) de l'aube en étant à distance de l'emplanture ( 31 ) de l'aube.

6. Dispositif ( 1 ) de projection suivant l'une des revendications 1 à 5,
dans lequel la fixation a des surfaces d'évacuation et/ou des canaux d'évacuation pour évacuer le produit projeté.

7. Dispositif ( 1 ) de projection suivant l'une des revendications 1 à 6,
dans lequel la chambre est une chambre ( 5 ) en dépression.

8. Dispositif ( 1 ) de projection suivant l'une des revendications précédentes,
qui est constitué en dispositif de projection pour la projection de consolidation, notamment pour le grenaillage d'aubes ( 2 ) de turbine.
